# EUROPÄISCHE PATENTSCHRIFT

(11) **EP 1 048 438 B1**
(45) Veröffentlichungstag und Bekanntmachung des Hinweises auf die Patenterteilung: **11.09.2002**
(21) Anmeldenummer: 99810361.8
(22) Anmeldetag: 29.04.1999
(51) Int. Cl.: B29C 51/04, B29C 51/22, B65D 65/40

(54) **Verfahren zum Herstellen von Verpackungsbehältern**
Method for producing of packaging containers
Procédé pour produire des conteneurs d'emballage

(43) Veröffentlichungstag der Anmeldung: 02.11.2000
(73) Patentinhaber: Alcan Technology & Management AG, 8212 Neuhausen am Rheinfall (CH)
(72) Erfinder: Ziegler, Andreas, 8234 Stetten (CH)

(56) Entgegenhaltungen:
- EP-A- 0 455 584
- EP-A- 0 779 143
- US-A- 4 466 845
- US-A- 4 563 325

## Beschreibung

Vorliegende Erfindung betrifft ein Verfahren zum Herstellen von becherförmigen Verpakkungsbehältern aus einem verformbaren Verpackungswerkstoff, insbesondere aus Metall oder einem Metall-Kunststoff-Verbund, durch Kaltumformen, wobei der Verpackungswerkstoff in wenigstens zwei Verfahrensschritten zu einem becherförmigen Verpackungsbehälter umgeformt wird, sowie einen während dem Verfahren als Zwischenprodukt gefertigten Vorformling zur Herstellung eines Verpackungsbehälters und einen Verpackungsbehälter. Ferner betrifft vorliegende Erfindung auch eine Vorrichtung zur Ausführung des Verfahrens sowie eine Verwendung des Verpackungsbehälters.

Es sind Verfahren bekannt, Verpackungsbehälter aus Metall-Werkstoffen oder Metall-Kunststoff-Verbund-Werkstoffen entweder durch Tiefziehen oder durch Streckziehen herzustellen. Der Unterschied zwischen einem Tiefziehen und einem Streckziehen besteht bekanntlich darin, dass beim Tiefziehen das Material in das Formwerkzeug nachfliessen kann, während es beim Streckziehen am Rand eingespannt gehalten wird, so dass sich die Wandstärke aufgrund einer Dehnung vermindert.

Zur Herstellung von becherförmigen Verpackungsbehältern wird in der Regel ein Tiefziehverfahren vorgezogen. Durch das Tiefziehen ist gewährleistet, dass der endgeformte Verpackungsbehälter im wesentlichen gleichmässige Wanddicken aufweist und folglich formstabil ist und eine hohe Festigkeit hat, und dass die Dichtigkeit des Verpackungsbehälters, insbesondere bei allgemein geringen Wanddicken, nicht durch eine zu starke Dehnung des Verpackungswerkstoffes beeinträchtigt wird.

In EP 0 455 584 B 1 wird ein Verfahren zur Herstellung einer Formpackung beschrieben, in welchem ein streckziehfähiges Verbundlaminat beispielsweise in kombinierten Verfahrensschritten zuerst einem Tiefziehen, dann einem kombinierten Tief-Streckziehen und einem abschliessenden Streckziehen unterzogen wird. Der dieser Offenlegungsschrift zu Grunde liegende Erfindungsgedanke beruht darauf, ein streckziehfähiges Verbundlaminat ganz oder zumindest teilweise einem Tiefziehen zu unterziehen, um die guten Barriereeigenschaften des Verbundlaminates zu bewahren, wobei die Endtiefe der Formpackung durch ein abschliessendes Streckziehen bzw. einem abschliessenden Streckziehschritt erhalten wird.

Beim Tiefziehen eines Verpackungsbehälters werden insbesondere die Wandbereiche durch die Gleitreibung zwischen Matrize und Stempel einer erhöhten mechanischen Belastung ausgesetzt. Dies bewirkt hohe laterale Zugspannungen im Verbundlaminat und unter anderem eine gewisse Streckung des Verpackungswerkstoffes im Wandbereich, wobei diese Streckung bedeutend geringer ist als dies bei einem Streckziehen mit vergleichbarer Vertiefung der Fall ist. Damit der Verpackungswerkstoff diesen Beanspruchungen standhält wird im Bereich der Seitenwand eine gewisse Mindestwanddicke benötigt.

Der Boden bzw. die Bodenfläche des Verpackungsbehälters wird hingegen mechanisch vergleichsweise weniger beansprucht, da dieser keiner oder nur einer geringen Gleitreibung ausgesetzt ist. Der Boden eines Verpackungsbehälters weist deshalb in der Regel Wanddikken auf, welche in ihrer Ausdehnung zum Erhalt der notwendigen Formstabilität, Steifigkeit oder Dichtigkeit gar nicht notwendig und somit unnötig gross sind.

Aufgabe vorliegender Erfindung ist ein Verfahren zum Herstellen eines Verpackungsbehälters der eingangs beschriebenen Art anzugeben, bei welchem, insbesondere in der Bodenfläche, keine unnötig grossen Wanddicken erzielt werden, so dass in der Herstellung eines solchen Verpackungsbehälters im Gegensatz zu den herkömmlich durch Tiefziehen produzierten Verpackungsbehältern sowohl Material als auch Kosten eingespart werden können.

Erfindungsgemäss wird dies dadurch erreicht, dass aus dem Verpackungswerkstoff durch Streckziehen ein Vorformling gefertigt wird, wobei die im herzustellenden Verpackungsbehälter vorgesehene Bodenfläche teilweise oder vollständig aus dem Verpackungswerkstoff streckgezogen und eine Vertiefung ausgeformt wird und der Verpackungswerkstoff vor und/oder nach dem Streckziehen zugeschnitten wird, und dass in einem oder mehreren nachfolgenden Verfahrensschritten der Vorformling durch Tiefziehen in die Endform des Verpackungsbehälters umgeformt wird.

Mit Kaltumformung wird in vorliegendem Fall eine Verformung bei Temperaturen von beispielsweise 5 bis 50 °C und vorzugsweise 20 bis 30 °C, umfasst. Es ist auch möglich einzelne Verfahrensschritte, insbesondere das Streckziehen bei einer höheren Temperatur als oben angegeben, auszuführen. Insbesondere bei Anwendung von Verbundlaminaten mit hohem Kunststoffanteil als Verpackungswerkstoffe kann eine vorgängige Erwärmung des Verpakkungswerkstoffes vorgesehen sein.

Der Verpackungswerkstoff kann beispielsweise in der Form eines Materialzuschnittes vorliegen. Der Verpackungswerkstoff und insbesondere der Materialzuschnitt ist zweckmässig flächenförmig und bezüglich seiner Dicke vorzugsweise folien-, blech-, oder plattenartig beschaffen. Der Materialzuschnitt wird vorteilhaft in einer Vorrichtung vorgängig aus beispielsweise Endlos-Verpackungswerkstoff, welcher von einer Vorratsrolle abgewickelt wird, ausgeschnitten oder ausgestanzt.

Der nach dem erfindungsgemässen Verfahren hergestellte Verpackungsbehälter und somit jeweils auch der Materialzuschnitt und der Vorformling wird vorteilhaft aus einem Verpakkungswerkstoff hergestellt, welcher eines der folgenden Metalle enthält oder daraus besteht: Eisenmetalle, wie Eisen, verzinktes Eisen oder Stahl, Nicht-Eisenmetalle, wie Messing, Kupfer, Aluminium und seine Legierungen oder Magnesium und seine Legierungen. Bevorzugt werden insbesondere Aluminium und seine Legierungen. Zweckmässig wird ein Aluminium mit einer Reinheit von wenigstens 98,0 %, zweckmässig 98,3 %, vorteilhaft 98,5 und insbesondere 98,6 % verwendet, wobei der Rest auf 100 % die begleitenden Verunreinigungen darstellen. Im weiteren werden auch bevorzugt Aluminiumlegierungen des Typs AlFeSi, AlMnMg oder des Typs AlFeSiMn verwendet. Die Metalle liegen insbesondere in Form von Folien vor, wobei die Metallfolien zweckmässig eine Dicke von 12 µm bis 160 µm aufweisen.

Der Verpackungswerkstoff besteht vorteilhaft aus einem Verbundlaminat aus den Werkstoffen Metall und Kunststoff.

Als Kunststoffe des Verbundlaminates finden insbesondere Schichten, Folien oder Folienverbunde, aus thermoplastischen Kunststoffen Anwendung.

Besonders geeignet sind thermoplastische Kunststoffe aus der Reihe der Polyolefine, wie Polyethylene (PE), z.B. PE niedriger Dichte (LDPE), PE mittlerer Dichte (MDPE), PE hoher Dichte (HDPE) oder Polypropylene, wie cast-Polypropylen (cPP), amorphe, kristalline oder hochkristalline Polypropylene, sowie aus der Reihe der Polyester, z.B. Polyethylenterephthalate (PET). Weitere vorteilhafte Kunststoffe sind Polystyrole (PS) sowie die Polyamide, wie PA 6, PA 66 oder PA 12 oder die Co- und Terpolymerisate der genannten Kunststoffe.

Die Schichtdicken der thermoplastischen Kunststoffe als Schichten, Folien oder Folienverbunde in den Metall-Kunststoff-Verbund-Werkstoffen können beispielsweise 10 bis 100 µm und bevorzugt 18 bis 60 µm resp. 23 bis 30 µm betragen.

Die Metallfolien und die thermoplastischen Kunststoffe können z.B. durch Kaschieren, Kalandrieren oder Extrusionskaschieren zu Verbundlaminaten zusammengefügt werden. Zum Verbinden der Schichten können fallweise Kaschierkleber und Haftvermittler angewendet werden. Als Kaschierkleber kommen beispielsweise Kleber aus Polyurethan (PUR) zur Anwendung. Die zu verbindenden Oberflächen können beispielsweise durch Plasma-, Korona- oder Flammvorbehandlung modifiziert werden.

Die Metall-Kunststoff-Verbunde weisen vorteilhaft auf wenigstens einer seiner Aussenseiten oder auf beiden Aussenseiten eine Siegelschicht in Form einer siegelbaren Folie oder eines Siegellackes auf. Die Siegelschicht ist bestimmungsgemäss in äusserster Lage innerhalb des Verbundaufbaues angeordnet. Insbesondere kann eine Siegelschicht auf einer Aussenseite des Verbundes vorgesehen sein, wobei diese Siegelschicht beim Verpackungsbehälter gegen die Inhaltsseite gerichtet sein soll, um das Ansiegeln einer Deckelfolie oder dergl. zu ermöglichen.

Ein nach dem erfindungsgemässen Verfahren hergestellter Verpackungsbehälter kann beispielsweise aus einem Verbundlaminat mit einer Aluminiumfolie einer Dicke zwischen 12 und 160 µm zwischen einer siegelfähigen Kunststoffinnenschicht, aus beispielsweise Polypropylen (PP), Polystyrol (PS), Polyethylen (PE), Polyamid (PA), wie PA 6, PA 66 oder PA 12 oder deren Copolymerisate einer Dicke zwischen 30 und 80 µm und einer Kunststoffaussenschicht, aus beispielsweise oPP, PET, oPE oder oPA, einer Dicke zwischen 1 und 40 µm bestehen. Die Kunststoffaussenschicht kann auch aus einem Lack aus Polyurethan-, Polyvinyl-, Polyester- oder Epoxyharzen gebildet sein.

Unter Innenschicht ist die an einem Behälter innenliegende, gegen den Inhalt weisende, und unter Aussenschicht ist die an einem Behälter aussenliegende, gegen aussen weisende Schicht oder Folie des Verpackungswerkstoffes zu verstehen.

Besonders bevorzugt ist jedoch ein Verbundlaminat mit einer Aluminiumfolie einer Dicke zwischen 60 µm bis und 160 µm, insbesondere zwischen 80 µm und 130 µm, bevorzugt 90 µm bis 120 µm zwischen einer, vorteilhaft siegelfähigen, Kunststoffinnenschicht mit hohem Dehnvermögen, beispielsweise eine Folie aus Polypropylen, insbesondere cast-Polypropylen, einer Dicke von 10 µm bis 90 µm, insbesondere von 40 µm bis 60 µm, besonders bevorzugt um 50 µm, und einer Kunststoffaussenschicht aus einem Lack, beispielsweise einem Polyurethanlack oder vorzugsweise aus einem Epoxy-Lack, z.B. einem modifizierten Epoxy-Lack, welcher vorteilhaft eingebrannt ist. Die Lackschicht weist zweckmässig eine Flächendichte von 2 bis 9 g/m², insbesondere von 3 bis 5 g/m², auf. Die siegelbare Kunststoffinnenschicht ist mittels eines Kunststoffklebers, wie beispielsweise einem Polyurethanklebers, welcher mit einer Flächendichte von 2 bis 9 g/m², insbesondere von 3 bis 5 g/m² aufgetragen ist, mit der Aluminiumfolie verbunden.

Der Verpackungsbehälter ist zweckmässig ein Verpackungsmittel zur Aufnahme von festen oder pastösen bis flüssigen Füllgütern, insbesondere von Nahrungsmitteln. Er besteht zweckmässig aus einer oder mehreren Seitenwänden, einer Bodenfläche, wobei die Bodenfläche fallweise eine hinterlegte Bodenfläche beinhalten kann, und wenigstens einer Behälteröffnung.

Ein nach dem erfindungsgemässen Verfahren hergestellter becherförmiger Verpackungsbehälter zeichnet sich dadurch aus, dass die Bodenfläche, insbesondere die hinterlegte Bodenfläche, teilweise oder vollständig streckgezogen ist und die Wanddicke der streckgezogenen Bodenfläche um 1 bis 20%, bevorzugt um 7 bis 12% dünner ist als die Wanddicke einer nicht-streckgezogenen Bodenfläche.

Unter "hinterlegte Bodenfläche" ist ein Flächenbereich in der Bodenfläche zu verstehen, welcher nach oben in Richtung Behälteröffnung angehoben und über eine Abstufung oder Abstufungen mit dem, von der Behälteröffnung her betrachtet, tieferliegenden Flächenbereich verbunden ist.

Die Bodenfläche und/oder die hinterlegte Bodenfläche können plan oder gewölbt sein. Vorzugsweise ist sowohl die Bodenfläche als auch die hinterlegte Bodenfläche plan. Der Ver-packungsbehälter kann im weiteren eine die Behälteröffnung umlaufende, geschlossene, vorzugsweise plane Randfläche ausbilden, welche mit der siegelfähigen Kunststoffinnenschicht nach oben weist, wobei mit "oben" die Richtung gemeint ist, in welcher die Behälteröffnung liegt. Die Randfläche kann zur Behälteröffnung hin eingerollt sein und eine Randzone ausbilden.

Der Verpackungsbehälter kann in der Draufsicht eine ein-, zwei-, drei-, vier- oder mehreckige Geometrie mit geraden oder gebogenen Seitenwandlinien oder eine ellipsenförmige, ovale, polygonale und insbesondere eine kreisförmige Geometrie aufweisen. Die Geometrie der Bodenfläche entspricht zweckmässig jeweils der Geometrie des Verpackungsbehälters in der Draufsicht. Die Bodenfläche ist bevorzugt kreisförmig, wobei der Verpackungsbehälter besonders bevorzugt eine ebenfalls kreisförmige, hinterlegte Bodenfläche mit einem kleineren Kreisradius aber demselben Kreismittelpunkt wie die Bodenfläche aufweist.

Der Verpackungsbehälter ist besonders bevorzugt tonnenförmig mit einer kreisförmigen Behälteröffnung und einer kreisförmigen Bodenfläche mit einer ebenfalls kreisförmigen hinterlegten Bodenfläche. Der Verpackungsbehälter verjüngt sich vorzugsweise gegen die Bodenfläche hin, d.h. die Seitenwand ist zur Bodenfläche hin einwärts geneigt, und nimmt eine Kegelstumpfform an. Um die Behälteröffnung herum ist vorzugsweise eine Randfläche ausgebildet.

In einer bevorzugten Ausführungsvariante eines Verpackungsbehälters ist der Durchmesser der Bodenfläche zwischen 50 mm und 100 mm, insbesondere zwischen 55 mm und 75 mm, vorzugsweise zwischen 62 mm und 68 mm, und der Durchmesser der hinterlegten Bodenfläche zwischen 45 mm und 95 mm, insbesondere zwischen 50 mm und 65 mm, vorzugsweise zwischen 54 mm und 62 mm.

Das erfindungsgemässe Verfahren beruht auf einem Kaltumformverfahren in wenigstens zwei Umformschritten.

In einem ersten oder in ersten Verfahrensschritten zur Herstellung eines oben beschriebenen Verpackungsbehälters wird zweckmässig die im Verpackungsbehälter vorgesehene Bodenfläche teilweise oder vollständig aus dem Verpackungswerkstoff durch Streckziehen vorgestreckt. Das Streckziehen wird vorzugsweise in einem Verfahrensschritt ausgeführt.

Der Verpackungswerkstoff wird zweckmässig in seinen Randbereichen, insbesondere im Bereich des äusseren Randes der durch Streckziehen auszuformenden Vertiefung, zwischen einem Niederhalter und einer Matrize mit Gesenköffnung festgehalten. In einem oder mehreren nachfolgenden Verfahrensschritten wird durch Streckziehen mittels eines Stempels eine gewölbte oder gerundete Vertiefung ausgeformt.

Beim Streckziehen wird die Wanddicke des gestreckten Materials durch Dehnung verringert und gleichzeitig seine Oberfläche vergrössert. Der streckgezogene Flächenbereich im Verpackungswerkstoff entspricht vorzugsweise höchstens der Bodenfläche des herzustellenden Verpackungsbehälters. Der Verpackungswerkstoff kann beispielsweise auch nur im Bereich der vorgesehenen hinterlegten Bodenfläche vorgestreckt werden.

Der Randbereich des Niederhalters ist zweckmässig gegengleich zum Randbereich der Matrize angeordnet und beide Randbereiche haben im wesentlichen die gleichen Abmessungen, so dass die Niederhalteröffnung zweckmässig in gleicher Lage und Anordnung und im wesentlichen von gleicher Grösse wie die Gesenköffnung in der Matrize ist.

Das Streckziehen erfolgt zweckmässig mit einer gesteuerten Niederhaltekraft des Niederhalters, welche derart reguliert wird, dass kein Material des Verpackungswerkstoffes aus dem Bereich der Matrize und des Niederhalters nachzieht und die Verformung und Strekkung des Verpackungswerkstoffes lediglich innerhalb des die Gesenköffnung überdeckenden Materials des Verpackungswerkstoffes erfolgt und das mit Druck beaufschlagte Material, insbesondere das mit der verformungswirksamen Oberfläche des Stempels in Berührung kommende Material, streckgezogen wird und eine Vertiefung aus dem Verpackungswerkstoff geformt wird.

Der auf den Verpackungswerkstoff bzw. auf Flächenabschnitte davon wirkende und die streckgezogene Vertiefung herbeiführende Verformungsdruck kann auch durch ein Fluid, insbesondere Druckluft oder durch Erzeugung eines Vakuums auf den Materialzuschnitt ausgeübt werden. Bevorzugt wird jedoch der Verformungsdruck über einen Stempel ausgeübt.

Die Niederhaltekraft beim Streckziehen kann auch variiert werden, so dass beispielsweise das Nachfliessen des Materials in einem bestimmten Mass zugelassen wird, so dass der Vorformling in einem kombinierten Tief-Streckziehverfahrensschritt hergestellt wird.

Das Streckziehen bzw. der Streckziehschritt kann auch bereits vor dem Zuschneiden des Verpackungswerkstoffes zu einem Materialzuschnitt ausgeführt werden. In dieser Ausführungsform wird das Streckziehen der vorgesehenen Bodenfläche des Verpackungsbehälters an dem beispielsweise als Endlosfolie vorliegenden Verpackungswerkstoff vorgenommen. Der Vorformling mit der streckgezogenen Vertiefung wird zweckmässig erst nach dem Streckziehen und vor dem Tiefziehen in einem weiteren Verfahrensschritt aus dem Verpakkungswerkstoff herausgeschnitten.

Eine Vorrichtung zur Herstellung eines Verpackungsbehälters nach dem erfindungsgemässen Verfahren zeichnet sich insbesondere dadurch aus, dass der Stempel zum Streckziehen einen gewölbten oder gerundeten, insbesondere einen kugelhaubenförmigen, Stempelboden und eine abgerundete Stempelkante zwischen dem Stempelboden und der Stempelwand -aufweist und das Verhältnis zwischen Kugelhaubenhöhe und Radius der Kugelhaube vorteilhaft von 0,15 bis 0,35, insbesondere von 0,22 bis 0,27 und bevorzugt rund 1/4 ist.

Der Stempel unterscheidet sich in seiner Geometrie zweckmässig von einem Stempel zum Tiefziehen. Der Stempelboden weist in der Draufsicht beispielsweise eine Geometrie auf, welche derjenigen des herzustellenden Verpackungsbehälters in Draufsicht und insbesondere seiner Bodenfläche resp. seiner hinterlegten Bodenfläche entspricht.

Bei kreisförmigen Bodenflächen ist der Stempelboden in der Draufsicht bevorzugt ebenfalls kreisförmig und weist in seiner dreidimensionalen Ausgestaltung vorzugsweise die Form eines Domes, Kalotte oder Kugelhaube auf. Das Verhältnis zwischen Kugelhaubenhöhe und Radius der Kugelhaube ist vorteilhaft von 0,15 bis 0,35, insbesondere von 0,22 bis 0,27, und bevorzugt rund 1/4. Der Kantenradius beträgt zweckmässig 1/4 bis 1/8, insbesondere 1/5 bis 1/7, vorzugsweise rund 1/6, des Durchmessers des verformungswirksamen Stempelbodens. Bei nicht-kreisförmigen Stempelböden soll mit Durchmesser der jeweils kleinste Durchmesser des verformungswirksamen Stempels gemeint sein.

In einer bevorzugten Ausführungsvariante liegt der maximale Durchmesser des Stempels mit verformungswirksamer Oberfläche zwischen 40 mm und 90 mm, insbesondere zwischen 45 mm und 70 mm, vorzugsweise zwischen 55 mm und 61 mm ist, und der Radius der Kugelhaube liegt zwischen 31 mm und 70 mm, insbesondere zwischen 35 mm und 54 mm und vorzugsweise zwischen 42 mm und 48 mm ist, und die Kugelhaubenhöhe liegt zwischen 9 mm und 22 mm, insbesondere zwischen 11 mm und 17 mm und vorzugsweise zwischen 13 mm und 15 mm ist, und der Kantenradius der Stempelkante liegt zwischen 5 mm und 20 mm, insbesondere zwischen 7 mm und 13 mm und vorzugsweise zwischen 9 mm und 11 mm ist.

Der Stempelboden in der Draufsicht kann auch eine plane Figur mit einer ein-, zwei-, drei-, vier- oder mehreckigen Geometrie mit geraden oder gebogenen Verbindungslinien oder einer ellipsenförmigen, ovalen oder polygonalen Geometrie darstellen.

Die verformungswirksame Oberfläche des Stempels ergibt sich zweckmässig aus dem Stempelboden und der Stempelkante zwischen Stempelboden und Stempelwand. Die Stempelwand ist bevorzugt keine verformungswirksame Oberfläche.

Aufgrund des gewölbten Stempelbodens kann sich der Verpackungswerkstoff ungehindert über die gesamte verformungswirksame Stempeloberfläche im wesentlichen gleichmässig dehnen, wodurch beispielsweise eine lokale Ausdünnung des Materials verhindert wird.

Der oder die beim Streckziehen angewendeten Stempel weisen zweckmässig eine verformungswirksame Oberfläche niedriger Reibung auf. Die niedrige Reibung kann ausgedrückt werden durch die dimensionslosen Zahlen nach der Vorschrift BS 2782 Methode 311 A. Die Reibung der Stempel, resp. der verformungswirksamen Oberfläche der Stempel, beträgt dabei zweckmässig von 0,05 bis 2,1.

Ein Stempel zum Durchführen des Ziehverfahrens nach der Erfindung, und insbesondere der verformungswirksame Teil des Stempels, ist vorteilhaft aus einem Werkstoff hoher Gleitfähigkeit, mechanischer Stabilität und Abriebfestigkeit. Die verformungswirksamen Oberflächen des Stempels kann aus Metall, wie Stahl, Chromstahl oder Aluminium, aus einem Kunststoff, wie z.B. Silikonkautschuke, Polytetrafluorethylen, Polyoxymethylen, Polyacetal (POM), Polyethylenterephthalat, Polyethylen, Gummi, Hartgummi oder Kautschuke, einschliesslich Acrylpolymerisaten. Die verformungswirksame Oberflächen aus Metallen sind vorzugsweise poliert. Weitere Oberflächenschichten mit niedriger Reibung, wie keramische Schichten oder graphit-, bornitrid- oder molybdändisulfidhaltige Schichten, sind anwendbar. Im weiteren sind auch Überzüge aus vorgenannten Materialien als verformungswirksame Stempeloberflächen möglich.

Der Stempel bzw. die verformungswirksame Stempeloberfläche besteht in einer vorteilhaften Ausführungsvariante aus einem polierten Stahl oder aus Polytetrafluorethylen (Teflon®).

Es kann im weiteren sowohl ein starrer als auch ein radial expandierbarer Stempel eingesetzt werden, wobei Letzterer vorteilhaft aus einem elastischen Kunststoff besteht.

Die Kontaktflächen zwischen dem Materialzuschnitt und der Oberflächen des Stempels und der Matrize, insbesondere der Gesenköffnung, bleiben während des Streckziehens bevorzugt ungeschmiert, dies insbesondere deshalb, damit das Material zwischen Matrize und Niederhalter nicht nachgleiten kann. Gegebenenfalls müssen vorhandene Schmiermittelreste vor dem Streckziehen mit den entsprechenden Hilfsmitteln entfernt werden.

Die Gesenköffnung beim Streckziehen ist vorzugsweise eine Vorform-Gesenköffnung und weist zweckmässig die Geometrie der verformungswirksamen Oberfläche des Stempels auf. Die dreidimensionale Geometrie der Gesenköffnung entspricht vorzugsweise der angestrebten Form der Vertiefung im Materialzuschnitt. Die Gesenköffnung ist zweckmässig in Passform zum verformungswirksamen Stempel, so dass das Material in der Endstufe des Streckziehens zwischen Stempel und Gesenköffnung anliegend ist.

Damit der Verpackungswerkstoff und dabei besonders das metallfolienhaltige Laminat, ohne Risse und Poren streckgezogen werden kann, muss ein genügend grosser seitlicher Abstand zwischen Stempel und Gesenköffnung eingehalten werden.

Der gestreckte Verpackungswerkstoff braucht jedoch nach Erreichen der Endstellung des 5 Stempels nicht an den Wänden der Gesenköffnung anzuliegen, sondern kann beispielsweise mit der vom Stempel abgewandten Seite in einem freien Bereich liegen.

Der Randbereich des Niederhalters und/oder der Randbereich der Matrize können teil- oder vollflächig ein Rauhigkeitsmuster aufweisen, welches die Haltekraft verstärkt. Typische Rauhigkeitsmuster sind Riffelungen, Waffelmuster, Warzenmuster, Wabenmuster, Noppen, Verzahnungen, aufgerauhte Oberflächen usw. Anstelle oder zusammen mit dem Rauhigkeitsmuster können auch umlaufende Leisten, beispielsweise aus einem elastischen Material, wie Gummi und dergl., eingesetzt werden.

Der im erfindungsgemässen Verfahren durch Streckziehen vorgeformte, aus dem Verpakkungswerkstoff zugeschnittene Vorformling ist ein Zwischenprodukt in der Herstellung eines erfindungsgemässen Verpackungsbehälters.

Es ist kennzeichnend, dass der Vorformling ein Materialzuschnitt aus Verpackungswerkstoff mit einer in diesen durch Streckziehen geformten Vertiefung ist und die Grösse der Oberfläche der streckgezogenen Vertiefung der Grösse wenigstens einer Teilfläche der Bodenfläche, insbesondere der Fläche der hinterlegten Bodenfläche, oder der Grösse der Bodenfläche des herzustellenden Verpackungsbehälters entspricht.

Die Form bzw. Geometrie der aus der Fläche des Verpackungsmaterials bzw. Materialzuschnittes geformten Vertiefung ist abhängig von der Form des herzustellenden Verpakkungsbehälters, insbesondere von der Geometrie seiner Bodenfläche resp. von der Geometrie seiner hinterlegten Bodenfläche.

Die Vertiefung weist in der Draufsicht von seiner Vertiefungsöffnung her bevorzugt eine Geometrie auf, welche derjenigen der Bodenfläche oder der hinterlegten Bodenfläche des Verpackungsbehälters in Draufsicht entspricht.

Bei kreisförmigen Bodenflächen ist die Geometrie der Vertiefungsöffnung in der Draufsicht bevorzugt ebenfalls kreisförmig. Die Vertiefung weist hier in seiner dreidimensionalen Ausgestaltung vorzugsweise die Form eines Domes, Kalotte oder Kugelhaube auf. Das Verhältnis zwischen Kugelhaubenhöhe und Radius der Kugelhaube ist vorteilhaft von 0,15 bis 0,35, insbesondere von 0,22 bis 0,27 und bevorzugt rund ¼.

In einer bevorzugten Ausführungsvariante ist der maximale Durchmesser der Vertiefung zwischen 40 mm und 90 mm, insbesondere zwischen 45 mm und 70 mm, vorzugsweise zwischen 55 mm und 61 mm, und der Radius der Kugelhaube ist zwischen 31 mm und 70 mm, insbesondere zwischen 35 mm und 54 mm, vorzugsweise zwischen 42 mm und 48 mm, und die Kugelhaubenhöhe ist zwischen 9 mm und 22 mm, insbesondere zwischen 11 mm und 17 mm, vorzugsweise zwischen 9 mm und 11 mm.

Die beschriebene Vertiefung kann in der Draufsicht auch eine plane Figur mit einer ein-, zwei-, drei-, vier- oder mehreckigen Geometrie mit geraden oder gebogenen Seitenlinien oder einer ellipsenförmigen, ovalen oder polygonalen Geometrie umreissen.

In einem oder mehreren nachfolgenden bzw. an das Streckziehen anschliessenden weiteren Verfahrensschritten wird der Vorformling einem Tiefziehen unterzogen, bei welchem dieser zum endgeformten Verpackungsbehälter umgeformt wird.

Der Vorformling wird mittels eines Stempels in eine Gesenköffnung der Matrize gezogen, wobei das nachfliessende Material beispielsweise zwischen einem Niederhalter und der Matrize geführt wird.

Das Tiefziehen erfolgt zweckmässig ohne oder mit einer Niederhaltekraft des Niederhalters derart, dass das zum Tiefziehen benötigte Material aus dem Bereich der Matrize und Niederhalters nachgezogen wird.

Das Tiefziehen wird vorzugsweise in einem Verfahrensschritt ausgeführt. Der Vorformling wird vorteilhaft auf die Matrize befördert, so dass dessen Vertiefung in die Gesenköffnung der Matrize zu liegen kommt, wobei der Vorformling vorteilhaft derart in der Gesenköffnung zentriert ist, dass die Mittelängsachse des Stempels durch den Flächenschwerpunkt der Vertiefung im Vorformling führt. Anschliessend wird ein Stempel gegen den Vorformling geführt und greift mit zunehmender Anhebung in die Gesenköffnungen der Matrize und verformt dabei den Vorformling, welcher in die Gesenköffnung tiefgezogen wird. Der Vorformling kann vollständig in die Gesenköffnung tiefgezogen werden, so dass der obere Verpackungsbehälterrand in der Fluchtlinie der Seitenwand liegt oder der Vorformling kann nur teilweise tiefgezogen werden, so dass sich am oberen Verpackungsbehälterrand ein schulterförmiger Randbereich ausbildet.

Nach Abschluss des Tiefziehens kann der endgeformte Verpackungsbehälter noch weiteren Bearbeitungsschritten unterzogen werden. So können beispielsweise weitere formgebende Verfahrensschritte, wie das Einrollen des Randbereiches zu einer Randzone oder das Aufbringen von Rauhigkeitsmustern auf die Verpackungsbehälteroberfläche vorgesehen sein. Im weiteren kann der Verpackungsbehälter einer spanenden Nachbearbeitung sowie einer abschliessenden Oberflächenbehandlung unterzogen werden.

Das Nachgleiten des Verpackungswerkstoffes beim Tiefziehen wird bevorzugt durch eine Schmierung zwischen dem Verpackungswerkstoff und dem Stempel, sowie zwischen Verpackungswerkstoff und der Matrize sowie dem Niederhalter unterstützt. Es kann jedoch gegebenenfalls auf eine Schmierung verzichtet werden, wobei zu beachten ist, dass die insbesondere Oberflächen des verformungswirksamen Stempels und der Matrize reibungsarm sind.

Die verformungswirksame Oberfläche des Stempels ergibt sich zweckmässig aus dem Stempelboden, der Stempelkante zwischen Stempelboden und Stempelwand und der Stempelwand. Der verformungswirksame Teil des Stempels bildet bevorzugt das formliche Gegenstück zur Gesenköffnung, wobei die Abmessung des Stempels so gewählt sind, dass zwischen dem vorgefahrenen Stempel und der Gesenköffnung genügend Raum für den Verpackungswerkstoff verbleibt. Sowohl der Stempel als auch die Gesenköffnung können an ihren Oberflächen grobskalige Rauhigkeitsmuster aufweisen, welche dem Verpackungsbehälter und insbesondere der Seitenwand eine besondere Oberflächenstruktur verleihen und den Verpackungsbehälter gegebenenfalls versteifen.

Der oder die beim Streckziehen angewendeten Stempel weisen zweckmässig eine verformungswirksame Oberfläche niedriger Reibung auf. Die niedrige Reibung kann ausgedrückt werden durch die dimensionslosen Zahlen nach der Vorschrift BS 2782 Methode 311 A. Die Reibung der Stempel, resp. der verformungswirksamen Oberfläche der Stempel, beträgt dabei vorzugsweise von 0,05 bis 2,1.

Ein Stempel zum Durchführen des Tiefziehverfahrens gemäss der Erfindung, und insbesondere der Teil des Stempels der mit dem Verpackungswerkstoff in Berührung steht, ist vorteilhaft aus einem Werkstoff hoher Gleitfähigkeit, mechanischer Stabilität und Abriebfestigkeit. Da die Umformkräfte der verwendeten streckziehfähigen Verpackungswerkstoffe vergleichsweise klein sind, kann die verformungswirksame Stempeloberfläche aus Metall oder aus Kunststoff bestehen. Als Stempelmaterialien können beispielsweise jene vorgenannten für das Streckziehen geeigneten Stempelmaterialien verwendet werden.

Beim Tiefziehen kann sowohl ein starrer Stempel als auch ein radial expandierbarer Stempel eingesetzt werden, wobei Letzerer vorteilhaft aus einem elastischen Kunststoff besteht.

Die Gesenköffnung ist zweckmässig eine Endform-Gesenköffnung und weist im wesentlichen die Endform des Verpackungsbehälters auf.

Die Bodenfläche des endgeformten Verpackungsbehälters ist durch die Vorstreckung im ersten Verfahrensgang je nach verwendetem Verpackungswerkstoff um 1-25%, insbesondere um 5 - 25%, biaxial gedehnt, wobei beispielsweise bei dehnfreundlichen Aluminiumlegierungen, wie AlFeSi, eine Dehnung von 5 - 25%, insbesondere von 10-20%, erreicht wird und bei weniger dehnfreundlichen Aluminiumlegierungen, wie AlMnMg, eine Dehnung von 8-15% erreicht wird. Die Wanddicke der streckgezogenen Bodenfläche ist im Vergleich zu einem im herkömmlichen Tiefziehverfahren hergestellten Verpackungsbehälter um vorteilhaft rund 1% bis 20%, bevorzugt um 7% bis 13%, reduziert.

Durch das Streckziehen der Bodenfläche kann je nach verwendetem Verpackungswerkstoff rund 1% - 15%, bevorzugt rund 3% - 8%, der Materialzuschnittsfläche eingespart werden.

Die einzelnen Verfahrensschritte zur Herstellung der Vorformlinge und der endgeformten Verpackungsbehälter können an einer oder an getrennten Stationen erfolgen. Die beiden Verfahrensgänge Streckziehen und Tiefziehen werden zweckmässig in einer Fertigungsanlage an derselben oder an separaten Stationen ausgeführt.

Die Vorformlinge können im weiteren beispielsweise vorgefertigt und zwischengelagert werden, um bei Bedarf zu Verpackungsbehältern weiterverarbeitet zu werden.

Der Verpackungsbehälter wird jedoch bevorzugt an einer Station sowohl streck- als auch tiefgezogen, wobei jeweils zwischen dem Streckziehen und dem Tiefziehen der verformungswirksame Stempel geändert und die Gesenköffnung angepasst wird.

Die Änderung des verformungswirksamen Stempels kann derart ausgeführt werden, dass die Stempel zum Streck- und Tiefziehen koaxial oder teleskopisch ineinander angeordnet sind. Ein erster Stempel mit einer verformungswirksamen Oberfläche ist teleskopisch in einem zweiten ringförmigen Stempel angeordnet und wird zum Streckziehen mit seiner verformungswirksamen Oberfläche ausgefahren. Der zweite Stempel ist in der Draufsicht ringförmig und wird zum Tiefziehen ausgefahren, so dass er mit seinen verformungswirksamen Stempelwänden den ersten Stempel überfährt. Derartige Stempel können auch aus zwei oder mehreren ringförmigen und einem innersten zylindrischen Stempel, die alle teleskopisch ineinander gleiten, gebildet werden.

Im weiteren kann auch in einem automatisierten Verfahrenszwischenschritt ein Auswechseln der Stempel vorgesehen sein.

Das Verfahren kann in einer weiteren Ausführungsform derart ausgeführt werden, dass mehrere Matrizen, insbesondere eine erste und zweite Matrize mit einer Vorform- resp. Endform-Gesenköffnung, mit ihren Niederhaltern nacheinander angeordnet sind und jede der Matrizen einen Stempel zugeordnet hat. Taktweise wird der Materialzuschnitt in einem ersten Verfahrensschritt in der ersten Matrize durch Streckziehen zu einem Vorformling vorverformt und in die zweite Matrize verschoben und in einem zweiten Schritt durch Tiefziehen endverformt.

Es ist auch möglich, die Vorverformung, d.h. das Streckziehen, und/oder die Endverformung, d.h. das Tiefziehen, in zwei oder mehrere Verfahrensschritte aufzuteilen. So kann beispielsweise das Streckziehen mit einem separaten Streckziehwerkzeug am Endlos-Verpackungswerkstoff vorgenommen werden, wobei in einem der nachfolgenden Verfahrensschritten der Vorformling aus dem Verpackungswerkstoff zugeschnitten wird und mit einem Tiefziehwerkzeug zum endgeformten Verpackungsbehälter tiefgezogen wird.

Die Vorrichtung zum Streckziehen und/oder Tiefziehen kann so konzipiert sein, dass der Verpackungsbehälter resp. der Vorformling durch Niederfahren des oder der Stempel von oben nach unten oder bevorzugt durch Hochfahren des oder der Stempel von unten nach oben streck- bzw. tiefgezogen wird.

Die nach dem erfindungsgemässen Verfahren hergestellten Verpackungsbehälter können als Verpackungsmittel für Füllgüter, wie Flüssigkeiten, Pasten, Feststoffe, Pulver, Granula oder als Behältnisse zum Lagern von genannten Füllgütern verwendet werden. Sie finden beispielsweise Anwendung für Pharmazeutika und Kosmetika und bevorzugt für Nahrungs- und Genussmittel.

Mit dem erfindungsgemässen Zweischrittumformverfahren ist es möglich, durch Material- und folglich auch Kosteneinsparung Tiefziehbehälter herzustellen, welche über eine vergleichbare Festigkeit, Stabilität und Dichtigkeit aufweisen, wie die nach einem herkömmlichen Tiefziehverfahren hergestellten Verpackungsbehälter. Im weiteren bewirkt die Verringerung der Wanddicke in der Bodenfläche bei einigen der aufgezählten Verpackungswerkstoffen verbesserte "Spring-back"-Eigenschaften, wodurch die Bodenfläche im Vergleich zu den herkömmlichen Verpackungsbehältern erst bei höheren Beanspruchungen dauerhaft deformiert wird.

Im folgenden wird die Erfindung beispielhaft und mit Bezug auf die beiliegenden Zeichnungen näher erläutert. Es zeigen:
- Fig. 1a-d:: ein erfindungsgemässes Verfahren in schematisch dargelegten Verfahrensschritten;
- Fig. 2a:: einen Ausschnitt eines nach dem erfindungsgemässen Verfahren durch Streckziehen hergestellten Vorformlings in perspektivischer Ansicht;
- Fig. 2b:: einen Ausschnitt eines nach dem erfindungsgemässen Verfahren durch Tiefziehen aus dem Vorformling gemäss Fig. 2a hergestellten Verpackungsbehälters in perspektivischer Ansicht;
- Fig. 3:: eine Aufsicht in Behälteröffnungsrichtung eines nach dem erfindungsgemässen Verfahren hergestellten Verpackungsbehälters;
- Fig. 4:: ein Diagramm enthaltend zwei Kurven aus Messwerten der relativen Dicke an verschiedenen Messpunkte im Verpackungsbehälter, wobei die Kurve A Messwerte von einem nach einem herkömmlichen Tiefziehverfahren hergestellten Verpackungsbehälter enthält und die Kurve B Messwerte von einem nach dem erfindungsgemässen Verfahren hergestellten Verpackungsbehälter enthält, und die den einzelnen Messwerten zugeordneten Ziffern in Kästchen zu den mit gleichen Ziffern in Kästchen bezeichneten Orten in Fig. 2b gehören.

In den nachfolgend beschriebenen Ausführungsbeispielen wurde jeweils einer der unten aufgeführten Verbundwerkstoffe als Verpackungswerkstoff verwendet:
[1] Lackschicht / Al 110 / PP 50,
[2] Lackschicht / Al 90 / PP 50,
[3] Lackschicht / Al 90 / PP 30,
wobei Al für Aluminium und PP für Polypropylen steht und die Ziffern für die Schichtresp. Foliendicke in µm stehen.

Die Kunststoffinnenschicht ist im vorliegenden Beispiel eine siegelfähige PP-Schicht und kann auf die Aluminiumfolie kaschiert oder extrudiert sein. Die PP-Schicht ist vorzugsweise mit einem PUR-Kleber einer Flächendichte von 3 bis 5 g/m² auf die Aluminiumfolie kaschiert. Die Lackschicht ist beispielsweise ein Epoxyharz.

Die vorgenannten Verpackungswerkstoffe sind nachfolgend zu ihrer Kennzeichnung lediglich nach ihrer Nummer benannt.

Die Verbundwerkstoffe [1] und [2] sind auch unter der Markenbezeichnung Steralcon® bekannt.

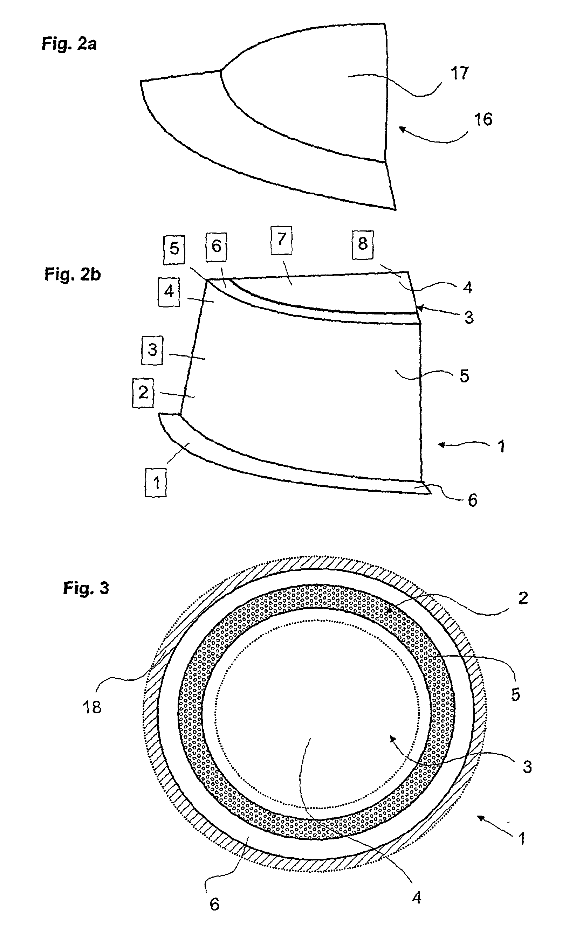

Der nach dem in nachfolgender Ausführungsvariante beschriebenen Verfahren hergestellte Verpackungsbehälter 1 ist tonnenförmig, wobei sich die Seitenwand 5 von der Behälteröffnung 2 zur Bodenfläche 3 hin leicht verjüngt, d.h. sie ist einwärts geneigt (Fig. 2b und Fig. 3). Die kreisförmige Behälteröffnung 2 hat einen Durchmesser zwischen 70 bis 80 mm, insbesondere von rund 75 mm. Die kreisförmige Bodenfläche 3 hat einen Durchmesser von 60 bis 70 mm, insbesondere von rund 65 mm. Weiters enthält der Verpackungsbehälter 1 eine kreisförmige, hinterlegte Bodenfläche 4 mit einem Durchmesser von 50 bis 60 mm, insbesondere um 55 mm. Die Randfläche 6 mit einer Breite zwischen 50 und 100 mm, insbesondere zwischen 65 und 80 mm, wird vorzugsweise in einem abschliessenden Bearbeitungsschritt zu einer Randzone mit einer Breite zwischen 2 und 7 mm, insbesondere um 4 mm eingerollt (nicht gezeigt in den Figuren). Die Höhe des Verpackungsbehälters 1 beträgt zwischen 25 und 45 mm, insbesondere um 35 mm. Die Seitenwand 5 weist zur Verstärkung Einbuchtungen in Form von Längsstreifen auf (nicht gezeigt in den Figuren).

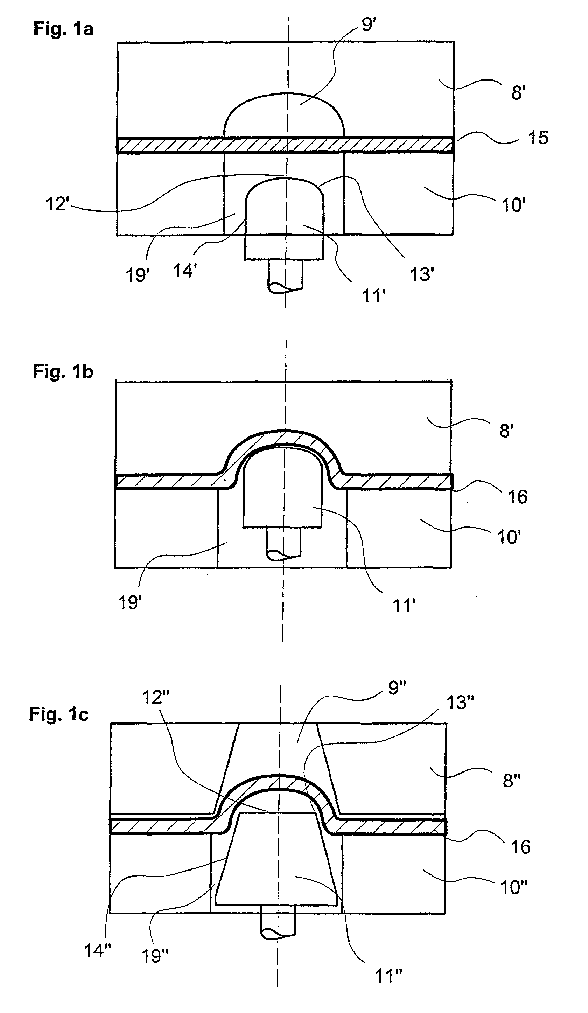

Zum Streckziehen wird der Materialzuschnitt 15 zwischen der Matrize 8' und dem Niederhalter 10' eingelegt (Fig. 1a). Durch Druckbeaufschlagung wird der Niederhalter 10' gegen die Matrize 8' gepresst, wobei der Materialzuschnitt 15 an allen Berührungsstellen zwischen Matrize 8' und Niederhalter 10' im wesentlichen unverstreckbar festliegt. Der Materialzuschnitt 15 wird insbesondere bis zum Rand der Vorform-Gesenköffnung 9' festgeklemmt.

Der Stempel 11' wird unter Krafteinwirkung durch die Niederhalteröffnung 19' im Niederhalter 10' angehoben und stösst auf den Materialzuschnitt 15. Der Stempel 11' wird unter Verformung bzw. Streckung im Materialzuschnitt 15 bis zum Erreichen des gewünschten Verformungsgrades weiter in die Vorform-Gesenköffnung 9' angehoben (Fig. 1b).

Der Stempel 11' wird beim Streckziehen unter Anwendung eines Pressdruckes von 6 bar, was einer Kraft von 25 kN entspricht, in die Vorform-Gesenköffnung 9' hochgefahren. Mit dem Erreichen der Endstellung des Stempels 11', d.h. seines Hubes, ist der Materialzuschnitt 15 in dieser Stellung auf die Endtiefe des Vorformlings 16 gezogen.

Der Stempel 11' misst einen Durchmesser von 58 mm, die Stempelkante 13' ist gerundet, wobei der Kantenradius 10 mm beträgt (Fig. 1a). Der Stempelboden 12' ist kugelhaubenförmig, wobei die Kugelhaubenhöhe 14 mm und der entsprechende Radius der Kugelhaube 45 mm betragen. Der gesamte Stempel 11' ist tonnenförmig, wobei lediglich der Stempelboden 12' und die Stempelkante 13' verformungswirksame Oberflächen ausbilden. Die verformungswirksame Stempeloberfläche ist aus poliertem Stahl.

Die Vorform-Gesenköffnung 9' ist in Passform zur verformungswirksamen Stempeloberfläche, wobei zwischen Stempel 11' und Vorform-Gesenköffnung 9' noch genügend Raum für den Verpackungswerkstoff bzw. Materialzuschnitt 15 freigehalten ist.

Der Vorformling 16 zeichnet sich durch eine im Materialzuschnitt 15 ausgeformte Vertiefung 17 im Bereich der vorgesehenen Bodenfläche des herzustellenden Verpackungsbehälters 1 aus (Fig. 2a). Die Vertiefung 17 ist dom- bzw. kugelhaubenförmig. Der Durchmesser der Vertiefungsöffnung ist rund 58 mm, die Kugelhaubenhöhe ist rund 14 mm. Der entsprechende Radius der Kugelhaube beträgt rund 45 mm. Bei Verwendung des Verbundlaminates [1] kann die Kugelhaubenhöhe auch 15 - 17,5 mm betragen.

In einem nachfolgenden Verfahrenszwischenschritt werden die Matrize 8' und der Stempel 11' durch die Matrize 8" und den Stempel 11" ausgewechselt, wobei der Niederhalter 10' ebenfalls durch einen Niederhalter 10" ausgewechselt wird oder an die Endform-Gesenköffnung 9" angepasst wird. Der Stempel 11" zum Tiefziehen ist in passform mit der Innenseite und die Endform-Gesenköffnung 9" ist in passform mit der Aussenseite des herzustellenden Verpackungsbehälters 1 (Fig. 1c). Die Stempelkante 13" ist vorzugsweise gerundet. Der Kantenradius beträgt beispielsweise 0,3 mm bis 1,5 mm, vorzugsweise 0,5 mm bis 1,2 mm.

Der Vorformling 16 wird nachfolgend einem Tiefziehschritt unterzogen, wobei der Vorformling zwischen der Matrize 8" und dem Niederhalter 10" eingelegt wird. Der Niederhalter 10" dient zur Führung des Verpackungswerkstoffes und übt keine Anpresskraft auf den Verpackungswerkstoff aus.

Der Stempel 11" hebt sich unter Krafteinwirkung durch die Niederhalteröffnung 19" im Niederhalter 10" und stösst auf den Vorformling 16. Der Stempel 11" hebt sich unter Verformung des Vorformlings 16 durch die Endform-Gesenköffnung 9", bis die Endform des Verpackungsbehälters 1 erreicht ist.

Der Stempel 11" wird unter Anwendung eines Pressdruckes von 3-4 bar in die Endform-Gesenköffnung 9" hochgefahren. Bei Verwendung des Verbundlaminates [3] als Verpakkungswerkstoff wird ein Druck von 3 bar und bei Verwendung der Verbundlaminate [1] und [2] wird ein Druck von 4 bar ausgeübt. Das Tiefziehen geschieht unter leichter Schmierung der Reibungsflächen, z.B. der verformungswirksamen Oberflächen des Umformwerkzeuges.

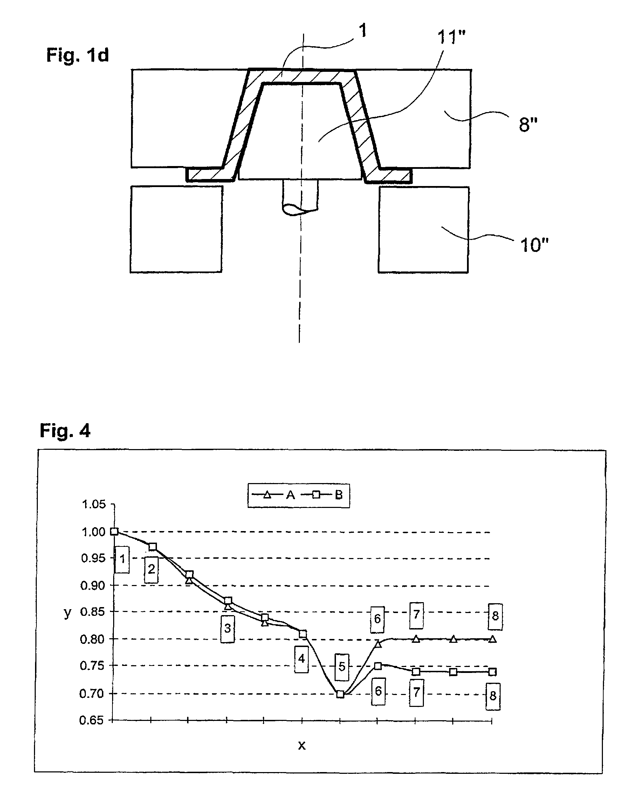

Mit der Erreichung der Endstellung des Stempels, d.h. seines Hubes, ist der Vorformling 16 auf die Endtiefe des Verpackungsbehälters 1 tiefgezogen (Fig. 1d).

Pro Minute können aus Materialzuschnitten 15 rund 80 bis 100 Verpackungsbehälter 1 geformt werden.

Fig. 4 zeigt zwei anhand von Messwerten konstruierte Verläufe von Wanddicken im Verpackungsbehälter. Die X-Achse kennzeichnet die Messpunkte und die Y-Achse zeigt die Messwerte als relative Wanddicken, wobei die Wanddicken jeweils relativ zum dazugehörigen Messwert 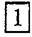 angegeben sind.

Die Kurve A zeigt den Verlauf der relativen Wanddicken an den Messpunkten 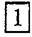 bis 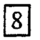 (Fig. 2b) in einem nach dem herkömmlichen Tiefziehverfahren hergestellten Verpackungsbehälter und die Kurve B zeigt den Verlauf der relativen Wanddicken, ebenfalls an den Messpunkten 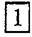 bis 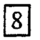 , in einem nach dem erfindungsgemäs-sen Verfahren hergestellten Verpackungsbehälter. Aus dem Kurvenvergleich ist zu entnehmen, dass die Schichtdicken in der Bodenfläche des erfindungsgemässen Verpackungsbehälters um 7% - 9% reduziert sind.

Ein nach dem erfindungsgemässen Verfahren hergestellter Verpackungsbehälter ergibt im Vergleich zu einem rein tiefgezogenen Verpackungsbehälter die in Fig. 3 als schraffierte Fläche 18 dargestellte Einsparung an Materialzuschnitt.

## Patentansprüche

1. Verfahren zum Herstellen von becherförmigen Verpackungsbehältern aus einem verformbaren Verpackungswerkstoff, insbesondere aus Metall oder einem Metall-Kunststoff-Verbund, durch Kaltumformen, wobei der Verpackungswerkstoff in wenigstens zwei Verfahrensschritten zu einem becherförmigen Verpackungsbehälter umgeformt wird,
**dadurch gekennzeichnet, dass**
aus dem Verpackungswerkstoff durch Streckziehen ein Vorformling (16) gefertigt wird, wobei die im herzustellenden Verpackungsbehälter (1) vorgesehene Bodenfläche (3) teilweise oder vollständig aus dem Verpackungswerkstoff streckgezogen und eine Vertiefung (17) ausgeformt wird und der Verpackungswerkstoff vor und/oder nach dem Streckziehen zugeschnitten wird, und dass in einem oder mehreren nachfolgenden Verfahrensschritten der Vorformling (16) durch Tiefziehen in die Endform des Verpackungsbehälters (1) umgeformt wird.

2. Verfahren zur Herstellung von Verpackungsbehältern nach Anspruch 1, **dadurch gekennzeichnet, dass** der Vorformling (16) aus einem aus dem Verpackungswerkstoff erstellten Materialzuschnitt (15) geformt wird und der Vorformling (16) mit einem oder mehreren Stempeln (11") mit einer verformungswirksamen Oberfläche niedriger Reibung, durch Tiefziehen in die Endform des Verpackungsbehälters (1) umgeformt wird.

3. Verfahren zur Herstellung von Verpackungsbehältern nach Anspruch 1, **dadurch gekennzeichnet, dass** das Streckziehen mittels eines Stempels (11') mit gewölbtem oder gerundetem Stempelboden (12') und mit abgerundeter Stempelkante (13') erfolgt und die verformungswirksame Stempeloberfläche aus dem Stempelboden (12') und der Stempelkante (13') besteht und der Verpackungswerkstoff während dem Streckziehen zwischen einem Niederhalter (10') und einer Matrize (8'), insbesondere im Bereich des äusseren Randes der auszuformenden Vertiefung (17), festgehalten wird.

4. Verfahren zur Herstellung von Verpackungsbehältern nach Anspruch 1, **dadurch gekennzeichnet, dass** das Streckziehen und das Tiefziehen nacheinander mit einer gesteuerten Niederhaltekraft des Niederhalters (11', 11") auf den Verpackungswerkstoff erfolgt und das Streckziehen mit einer Niederhaltekraft des Niederhalters (11') derart erfolgt, dass kein Material des Verpackungswerkstoffes aus dem Bereich der Matrize (8') und des Niederhalters (10') nachzieht und der mit Druck beaufschlagte Flächenbereich des Verpackungswerkstoffes, insbesondere der mit der verformungswirksamen Stempeloberfläche in Berührung kommende Flächenbereich, streckgezogen wird, wobei die Verformung und Streckung des Verpackungswerkstoffes lediglich innerhalb des die Vorform-Gesenköffnung (9') überdeckenden Flächenbereiches des Verpakkungswerkstoffes erfolgt, und dass das Tiefziehen mit keiner oder mit einer Niederhaltekraft des Niederhalters (11") derart erfolgt, dass das zum Tiefziehen benötigte Verpackungsmaterial aus dem Bereich der Matrize (8") und des Niederhalters (10") nachgezogen wird.

5. Verfahren zur Herstellung von Verpackungsbehältern nach Anspruch 1, **dadurch gekennzeichnet, dass** das Streckziehen und das Tiefziehen mit Stempeln durchgeführt wird und die Stempel zwei oder mehrere ineinander teleskopisch gleitende Stempel sind, die nacheinander in die Gesenköffnungen (9', 9") gefahren werden, und der Verpackungswerkstoff zuerst zu einem Vorformling (16) streckgezogen und in einem der nachfolgenden Verfahrensschritten zum Verpackungsbehälter (1) tiefgezogen wird, wobei ein erster Stempel in die Vorform-Gesenköffnung (9') gefahren wird und den Verpackungswerkstoff zum Vorformling (16) umformt und ein zweiter zylinderförmiger Stempel, der teleskopisch im ersten Stempel gleitet, über den zweiten Stempel gefahren wird und der erste und der zweite Stempel zusammen in die Endform-Gesenköffnung (9") gefahren werden und den Vorformling (16) in die Endform des Verpackungsbehälters (1) tiefziehen.

6. Verfahren zur Herstellung von Verpackungsbehältern nach Anspruch 1, **dadurch gekennzeichnet, dass** ein erster und ein zweiter Stempel (11', 11") nacheinander in die Vorform- und Endform-Gesenköffnungen (9', 9") der Matrizen (8', 8") gefahren werden und der Verpackungswerkstoff zuerst zu einem Vorformling (16) streck- und in einem der nachfolgenden Verfahrensschritten zum Verpackungsbehälter (1) tiefgezogen wird und zwischendurch die Vorform- (9') durch die Endform-Gesenköffnung (9") ersetzt wird.

7. Verfahren zur Herstellung von Verpackungsbehältem nach Anspruch 1, **dadurch gekennzeichnet, dass** zwei Matrizen (8', 8") nacheinander angeordnet sind und jede der Matrizen (8', 8") einen Stempel (11', 11") zugeordnet hat und in der ersten Matrize (8') der Verpackungswerkstoff zum Vorformling (16) streckgezogen wird und der Vorformling (16) auf die zweite Matrize (8") verschoben und zum Verpackungsbehälter (1) tiefgezogen wird und die Vorformlinge (16) taktweise von der ersten Matrize (8') zur zweiten Matrize (8") verschoben werden.

8. Vorrichtung zur Herstellung von Verpackungsbehältern nach Anspruch 1,
**dadurch gekennzeichnet, dass**
der Stempel (11') zum Streckziehen einen gewölbten oder gerundeten, insbesondere einen kugelhaubenförmigen, Stempelboden (12') und eine abgerundete Stempelkante (13') zwischen dem Stempelboden (12') und der Stempelwand (14') aufweist und das Verhältnis zwischen Kugelhaubenhöhe und Radius der Kugelhaube vorteilhaft von 0,15 bis 0,35, insbesondere von 0,22 bis 0,27 und bevorzugt rund 1/4 ist.

9. Vorformling hergestellt gemäss dem Verfahren nach Anspruch 1,
**dadurch gekennzeichnet, dass**
der Vorformling (16) ein Materialzuschnitt aus Verpackungswerkstoff mit einer in diesen durch Streckziehen geformten Vertiefung (17) ist und die Grösse der Oberfläche der streckgezogenen Vertiefung (17) der Grösse wenigstens einer Teilfläche der Bodenfläche (3), insbesondere der Fläche der hinterlegten Bodenfläche (4), oder der Grösse der Bodenfläche (3) des herzustellenden Verpackungsbehälters (1) entspricht.

10. Vorformling nach Anspruch 9, **dadurch gekennzeichnet, dass** die Vertiefung (17) die Form einer Haube, insbesondere einer Kugelhaube aufweist und das Verhältnis von Kugelhaubenhöhe und Radius der Kugelhaube vorteilhaft von 0,15 bis 0,35, insbesondere von 0,22 bis 0,27 und bevorzugt rund 1/4 ist.

11. Verpackungsbehälter hergestellt nach Anspruch 1,
**dadurch gekennzeichnet, dass**
die Bodenfläche (3), insbesondere die hinterlegte Bodenfläche (4), teilweise oder vollständig streckgezogen ist und die Wanddicke der streckgezogenen Bodenfläche (3) um 1 bis 20%, bevorzugt um 7 bis 12% dünner ist als die Wanddicke einer nicht-streckgezogenen Bodenfläche.

12. Verpackungsbehälter nach Anspruch 11, **dadurch gekennzeichnet, dass** die Bodenfläche (3) kreisförmig ist und vorzugsweise eine kreisförmig hinterlegte Bodenfläche (4) aufweist.

13. Verpackungsbehälter nach Anspruch 11, **dadurch gekennzeichnet, dass** der Verpakkungsbehälter (1) aus einem Verbundlaminat mit einer Aluminiumfolie einer Dicke von 60-160 µm, insbesondere von 80-130 µm, einer siegelfähigen Kunststoffinnenschicht hohen Dehnvermögens von 30-80 µm, insbesondere von 40-60 µm, vorzugsweise aus Polypropylen, und einer Kunststoffaussenschicht aus einem Lack, insbesondere aus einem Epoxy-Einbrennlack, mit einer Flächendichte von 1-9 g/m², insbesondere von 3-5 g/m², besteht.

14. Verpackung, insbesondere Nahrungsmittelverpackung, unter Verwendung eines Verpackungsbehälters nach Anspruch 11.

## Claims

1. Process for the production of cup-shaped packaging containers from a formable packaging material, in particular metal or a metal/plastic composite, by cold forming, the packaging material being formed into a cup-shaped packaging container in at least two steps, **characterised in that** a preform (16) is produced from the packaging material by stretch forming, the intended bottom surface (3) of the packaging container (1) to be produced being partially or completely stretch-formed from the packaging material and a recess (17) being formed and the packaging material being blanked before and/or after the stretch forming, and that the preform (16) is formed into the final shape of the packaging container (1) by deep drawing in one or more subsequent steps.

2. Process for the production of packaging containers according to claim 1, **characterised in that** the preform (16) is formed from a blank (15) produced from the packaging material and the preform (16) is formed into the final shape of the packaging container (1) by deep drawing with one or more punches (11") with a low-friction forming surface.

3. Process for the production of packaging containers according to claim 1, **characterised in that** the stretch forming is carried out by means of a punch (11') with a convex or rounded bottom (12') and with a rounded edge (13') and the forming surface of the punch consists of the bottom (12') and the edge (13') and the packaging material is held between a clamping device (10') and a die (8'), in particular in the region of the outer edge of the recess (17) to be formed, during the stretch forming.

4. Process for the production of packaging containers according to claim 1, **characterised in that** the stretch forming and the deep drawing are carried out one after the other with a controlled force applied to the packaging material by the clamping device (11', 11") and the stretch forming is carried out with the force applied by the clamping device (11') such that no packaging material is redrawn from the region of the die (8') and the clamping device (10') and the surface region of the packaging material to which pressure is applied, in particular the surface region coming into contact with the forming surface of the punch, is stretch formed, the forming and stretching of the packaging material only being carried out within the surface region of the packaging material covering the preforming opening (9'), and that the deep drawing is carried out with no force applied by the clamping device (11") or with the force applied by the clamping device such that the packaging material required for the deep drawing is redrawn from the region of the die (8") and the clamping device (10").

5. Process for the production of packaging containers according to claim 1, **characterised in that** the stretch forming and the deep drawing are carried out with punches and the punches are two or more punches sliding telescopically one inside the other which are moved one after the other into the openings (9', 9") and the packaging material is first stretch-formed into a preform (16) and is deep-drawn into the packaging container (1) in one of the subsequent steps, a first punch being moved into the preforming opening (9') and forming the packaging material into the preform (16) and a second cylindrical punch sliding telescopically in the first punch being moved over the second punch and the first and second punches being moved together into the finishing opening (9") and deep drawing the preform (16) into the final shape of the packaging container (1).

6. Process for the production of packaging containers according to claim 1, **characterised in that** first and second punches (11', 11") are moved one after the other into the preforming and finishing openings (9', 9") of the dies (8', 8") and the packaging material is first stretch-formed into a preform (16) and then deep-drawn into the packaging container (1) in one of the subsequent steps and in between the preforming opening (9') is replaced by the finishing opening (9").

7. Process for the production of packaging containers according to claim 1, **characterised in that** two dies (8', 8") are arranged one after the other and each of the dies (8', 8") has an associated punch (11', 11") and the packaging material is stretch-formed into the preform (16) in the first die (8') and the preform (16) is moved on to the second die (8") and deep-drawn into the packaging container (1) and the preforms (16) are moved in time from the first die (8') to the second die (8").

8. Device for the production of packaging containers according to claim 1, **characterised in that** the punch (11') for stretch forming has a convex or rounded, in particular spherical cap-shaped bottom (12') and a rounded edge (13') between the bottom (12') and the wall (14') of the punch and the ratio between the height and the radius of the spherical cap is advantageously from 0.15 to 0.35, in particular from 0.22 to 0.27 and preferably approximately 1/4.

9. Preform produced by the process according to claim 1, **characterised in that** the preform (16) is a packaging material blank with a recess (17) formed therein by stretch forming and the dimensions of the surface of the stretch-formed recess (17) correspond to the dimensions of at least part of the bottom surface (3), in particular the surface area of the back bottom surface (4), or to the dimensions of the bottom surface (3) of the packaging container (1) to be produced.

10. Preform according to claim 9, **characterised in that** the recess (17) is in the form of a cap, in particular a spherical cap, and the ratio between the height and the radius of the spherical cap is advantageously from 0.15 to 0.35, in particular from 0.22 to 0.27 and preferably approximately 1/4.

11. Packaging container produced according to claim 1, **characterised in that** the bottom surface (3), in particular the back bottom surface (4), is partially or completely stretch-formed and the wall thickness of the stretch-formed bottom surface (3) is 1 to 20 %, preferably 7 to 12 % thinner than the wall thickness of a bottom surface which has not been stretch-formed.

12. Packaging container according to claim 11, **characterised in that** the bottom surface (3) is circular and preferably has a circular back bottom surface (4).

13. Packaging container according to claim 11, **characterised in that** the packaging container (1) consists of a composite laminate with an aluminium foil having a thickness of 60-160 µm, in particular 80-130 µm, a sealable plastic inner layer with high extensibility of 30-80 µm, in particular 40-60 µm, preferably of polypropylene, and a plastic outer layer consisting of a lacquer, in particular an epoxy-based stoving lacquer, having a surface density of 1-9 g/m², in particular 3-5 g/m².

14. Packaging, in particular food packaging, using a packaging container according to claim 11.

## Revendications

1. Procédé pour fabriquer des récipients d'emballage en forme de pots constitués par un matériau d'emballage déformable, notamment un métal ou un composite métal-matière plastique, par formage à froid, le matériau d'emballage étant déformé au moins en deux étapes opératoires pour former un récipient d'emballage en forme de pot,
**caractérisé en ce**
**qu'**on fabrique une ébauche (16) par étirage à partir du matériau d'emballage, en formant partiellement ou complètement la surface de fond (3) prévue dans le récipient d'emballage à fabriquer (1), à partir du matériau d'emballage et on forme un renfoncement (17), et en découpant le matériau d'emballage avant et/ou après l'étirage, et que en une ou plusieurs étapes opératoires suivantes, on déforme l'ébauche (16) par emboutissage profond pour obtenir la forme finale du récipient d'emballage (1).

2. Procédé pour fabriquer des récipients d'emballage selon la revendication 1, **caractérisé en ce qu'**on forme l'ébauche (16) à partir d'un flan (15) obtenu à partir du matériau d'emballage, et qu'on déforme l'ébauche (16) avec un ou plusieurs poinçons (11") possédant une surface active pour la déformation, présentant un faible frottement, par emboutissage profond pour obtenir la forme finale du récipient d'emballage (1).

3. Procédé pour fabriquer des récipients d'emballage selon la revendication 1, **caractérisé en ce que** l'étirage s'effectue à l'aide d'un poinçon (11') possédant un fond cintré ou arrondi (12') et comportant des bords de poinçons arrondis (13') et que la surface du poinçon, active pour la déformation, est constituée par le fond (12') du poinçon et par le bord (13') du poinçon et que pendant l'étirage, on maintient fermement le matériau d'emballage entre un serre-flan (10') et une matrice (8'), notamment dans a zone du bord extérieur du renfoncement (17) devant être formé.

4. Procédé pour fabriquer des récipients d'emballage selon la revendication 1, **caractérisé en ce que** l'étirage et l'emboutissage profond sont exécutés successivement avec une force commandée de serrage du serre-flan (11',11") sur le matériau d'emballage et que l'étirage s'effectue avec une force de serrage du serre-flan (11') tel qu'aucune partie du matériau d'emballage ne reflue hors de la zone de la matrice (8') et du serre-flan (10') et qu'on étire la partie, chargée en pression, de la surface du matériau d'emballage, notamment la zone de surface, qui vient en contact avec la surface du poinçon active pour la déformation, la déformation et l'étirage du matériau d'emballage s'effectuant uniquement à l'intérieur de la zone de surface, qui recouvre l'ouverture (9') de la matrice de préformage, du matériau d'emballage, et que l'emboutissage profond est exécuté sans ou avec une force de serrage du serre-flan (11) de telle sorte que le matériau d'emballage nécessaire pour l'emboutissage profond est refoulé hors de la zone de la matrice (8") et du serre-flan (10").

5. Procédé pour fabriquer des récipients d'emballage selon la revendication 1, **caractérisé en ce qu'**on exécute l'étirage et l'emboutissage profond avec des poinçons et que les poinçons sont deux ou plusieurs poinçons qui glissent de façon télescopique les uns dans les autres et qui sont déplacés successivement dans les ouvertures de matrice (9',9") et qu'on étire tout d'abord le matériau d'emballage pour former une ébauche (16) et qu'on lui applique un emboutissage profond lors de l'une des étapes opératoires suivantes, pour former le récipient d'emballage (1), auquel cas un premier poinçon est déplacé dans l'ouverture de matrice de préformage (9') et déforme le matériau d'emballage pour constituer la préforme (16), et un second poinçon de forme cylindrique, qui glisse de façon télescopique dans le premier poinçon, est déplacé par-dessus le second poinçon, et les premier et second poinçons sont déplacés conjointement dans l'ouverture de matrice de préformage (9") et réalisent l'emboutissage profond de l'ébauche (16) pour l'obtention de la forme finale du récipient d'emballage (1).

6. Procédé pour fabriquer des récipients d'emballage selon la revendication 1, **caractérisé en ce qu'**on déplace les premier et second poinçons (11',11") successivement dans les ouvertures de formage et de formage final (9',9") des matrices (8',8") et qu'on étire tout d'abord le matériau d'emballage pour former l'ébauche (16) et que lors des étapes opératoires suivantes, on lui applique un emboutissage profond pour former le récipient d'emballage (1) et qu'entre-temps on place l'ouverture de matrice de préformage (9') par l'ouverture de matrice (9") pour la forme finale.

7. Procédé pour fabriquer des récipients d'emballage selon la revendication 1, **caractérisé en ce que** deux matrices (8',8") sont disposées côte-à-côte et qu'un poinçon (11',11") est associé à chacune des matrices (8',8") et que dans la première matrice (8') on étire le matériau d'emballage pour former l'ébauche (16) et qu'on repousse l'ébauche (16) sur la seconde matrice (8") et qu'on réalise l'emboutissage profond de cette ébauche pour former le récipient d'emballage (1) et qu'on repousse les ébauches (16) de façon cadencée de la première matrice (8') à la seconde matrice (8").

8. Procédé pour fabriquer des récipients d'emballage selon la revendication 1, **caractérisé en ce que** le poinçon (11') servant à réaliser l'étirage comporte un fond de poinçon (12') cintré ou arrondi, notamment en forme de calotte sphérique, et un bord arrondi (13') situé entre le fond (12') et la paroi (14') du poinçon, et que le rapport entre la hauteur et le rayon de la calotte sphérique est avantageusement compris entre 0,15 et 0,35 et notamment entre 0,22 et 0,27 et de préférence est égal exactement à 1/4.

9. Ebauche fabriquée selon le procédé selon la revendication 1, **caractérisée en ce que** l'ébauche (16) est un flan du matériau d'emballage possédant un renfoncement (17) formé dans ce matériau par étirage, et que la taille de la surface du renfoncement étiré (17) correspond à la taille d'au moins une surface partielle de la zone de fond (3), notamment de la surface de la zone de fond décalée (4) ou de la taille de la surface de fond (3) du récipient d'emballage devant être fabriqué (1).

10. Ebauche selon la revendication 9, **caractérisée** ne ce que le renfoncement (17) possède la forme d'une calotte, notamment d'une calotte sphérique et que le rapport de la hauteur au rayon de la calotte sphérique est compris avantageusement entre 0,15 et 0,35 et notamment entre 0,22 et 0,27 et est égal de préférence exactement à 1/4.

11. Récipient d'emballage selon la revendication 1, **caractérisé en ce que** la surface de fond (3), notamment la surface de fond décalée (4) est étirée en partie ou en totalité et l'épaisseur de paroi de la surface de fond étiré (3) possède une épaisseur inférieure d'environ 1 à 20 % et de préférence d'environ 7 à 12 %, à l'épaisseur de la paroi d'une surface de fond non étirée.

12. Récipient d'emballage selon la revendication 11, **caractérisé en ce que** la surface de fond (3) possède une forme circulaire et comporte de préférence une surface de fond décalée de forme circulaire (4).

13. Récipient d'emballage selon la revendication 11, **caractérisé en ce que** le récipient d'emballage (1) est constitué par un stratifié composite comprenant une feuille d'aluminium ayant une épaisseur d'environ 60-160 µm, notamment de 80-130 µm, une couche intérieure en matière plastique pouvant être scellée et possédant une capacité de dilatation importante de 30-80 µm, notamment de 40-60 µm, de préférence réalisée en polypropylène, et une couche extérieure en matière plastique formée d'une peinture, notamment d'une peinture époxy apte à la cuisson, possédant une densité surfacique de 1-9 g/m², notamment de 3-5 g/m².

14. Emballage, notamment emballage pour denrées alimentaires, utilisant un récipient d'emballage selon la revendication 11.
